# EUROPÄISCHE PATENTANMELDUNG

(11) **EP 0 873 782 A1**
(43) Veröffentlichungstag der Anmeldung: **28.10.1998**
(21) Anmeldenummer: 98105359.8
(22) Anmeldetag: 25.03.1998
(51) Int. Cl.: B01J 8/00, B01J 8/02, C01B 3/38, H01M 8/06

(54) **Reformierungsreaktoranlage, insbesondere zur Wasserdampfreformierung von Methanol**

(30) Priorität: 23.04.1997 DE 19717067
(71) Anmelder: DBB Fuel Cell Engines Gesellschaft mit beschränkter Haftung, 73230 Kirchheim/Teck-Nabern (DE)
(72) Erfinder: Autenrieth, Rainer, 89155 Erbach (DE); Heil, Dietmar, 88477 Schwendi (DE)

(57) **Zusammenfassung**

Die Erfindung bezieht sich auf eine insbesondere zur Wasserdampfreformierung von Methanol geeignete Reformierungsreaktoranlage mit einem Reformierungsreaktor (1a), in dem sich ein Reformierungskatalysatormaterial (3) befindet und dem eintrittsseitig (4) ein zu reformierendes Gas-/Dampfgemisch (6) zuführbar ist.

Erfindungsgemäß ist der Eintrittsseite (4) des Reformierungsreaktors (1a) ein Tropfenfängerelement (8) zugeordnet, um gegebenenfalls im Gas-/Dampfgemisch enthaltene Tropfen abzufangen und so deren schädigenden Kontakt mit dem Katalysatormaterial (3) zu verhindern.

Verwendung z.B. als Anlage zur Wasserdampfreformierung von Methanol zwecks Wasserstoffgewinnung für die Brennstoffzellen von Kraftfahrzeugen mit Brennstoffzellenantrieb.

## Beschreibung

Die Erfindung bezieht sich auf eine mehrstufige Reformierungsreaktoranlage nach dem Oberbegriff des Anspruchs 1.

Mehrstufige Reformierungreaktoren sind beispielsweise zur Wasserdampfreformierung von Methanol gebräuchlich, wobei der eintrittsseitigen Reaktorstufe das zu reformierende Gas-/Dampfgemisch aus Methanol und Wasser, das z.B. in einem vorgeschalteten Verdampfer aufbereitet werden kann, zugeführt und dort sowie gegebenenfalls in einer oder mehreren anschließenden Reaktorstufen in einer endothermen Reformierungsreaktion in ein wasserstoffreiches Reformat umgewandelt wird. Anlagen dieser Art sind in den Patentschriften US 5.248.566 und US 5.401.589 offenbart.

In der deutschen Patentanmeldung Nr. 196 24 435.8 ist ein dreistufiger Reformierungsreaktor beschrieben, der als sogenannter passiver Reaktor realisiert ist, bei welchem nur der mittleren Reaktorstufe eine Heizeinrichtung zugeordnet ist, während die eintrittsseitige und die austrittsseitige Reaktorstufe direkt oder indirekt dadurch in Wärmekontakt stehen, daß der aus der austrittsseitigen Reaktorstufe austretende Reaktionsgasstrom durch einen mit der eintrittsseitigen Reaktorstufe in Wärmekontakt stehenden Temperierraum hindurchgeleitet wird. Dabei bilden vorzugsweise die eintrittsseitige Reaktorstufe eine Vorreformierungsstufe und die austrittsseitige Reaktorstufe eine Shiftreaktionsstufe, in welcher Kohlenmonoxid exotherm in Kohlendioxid umgewandelt wird, so daß die eintrittsseitige Reaktorstufe mit dadurch erzeugter Wärme beheizt wird.

Bei einem in der deutschen Patentanmeldung Nr. 196 23 998.2 beschriebenen Reformierungsreaktor ist in einem Reaktionsraumanschlußbereich, der primär als Gasauslaßbereich, bei Bedarf auch als Gaseinlaßbereich dienen kann, ein Filter vorgesehen, das darauf ausgelegt ist, feine Staubpartikel der dort als Reformierungskatalysatormaterial verwendeten Katalysatorpelletschüttung auszufiltern. Die Pelletschüttung wird im Reaktionsraum des Reaktors von einem Sieb getragen, unter dem sich ein Metallvlies befindet, mit dem Pelletbruchstücke, die durch das Sieb fallen, aufgefangen und auf diese Weise daran gehindert werden können, über den Reaktionsraumanschlußbereich in benachbarte Anlagenkomponenten zu gelangen.

Aus der Offenlegungsschrift DE 27 17 993 A1 ist ein einstufiger Methanolreformierungsreaktor bekannt, dem eine Verbrennungseinrichtung, beispielsweise in Form eines Gasmotors, nachgeschaltet ist, in welchem das vom Reformierungsreaktor gelieferte, wasserstoffreiche Reformatgas verbrannt wird. Der Reaktor ist in Doppelrohrbauweise mit einem Innenrohr und einem dieses umgebenden Außenrohr realisiert. Der zwischen den Rohren gebildete Ringraum bildet einen Reaktionsraum, der in einem eintrittsseitigen Teil ein wärmeleitendes faseriges Material und im übrigen Teil eine geeignete Katalysatorpelletschüttung enthält. Durch das Innenrohr wird das von der Verbrennungseinrichtung erzeugte und zum Reformierungsreaktor rückgeführte, heiße Verbrennungsgas hindurchgeleitet, um dadurch den Reformierungsreaktionsraum zu beheizen. In den Reaktionsraum eingeleitetes Methanol oder Methanol/Wasser-Gemisch wird während des Durchströmens der Zwischenräume des wärmeleitenden faserigen Materials erhitzt und verdampft. Alternativ zu dem faserigen Material wird ein getrennter, die Verbrennungsgaswärme nutzender Verdampfer vorgeschlagen.

Besonders bei mobilen Anwendungen, wie der Verwendung einer Reformierungsreaktoranlage in brennstoffzellenbetriebenen Kraftfahrzeugen zwecks Gewinnung von in die Brennstoffzellen einzuspeisendem Wasserstoff, besteht Bedarf an Anlagen mit kompaktem Aufbau bei hoher Volumen- und Gewichtsausnutzung, Robustheit und langer Lebensdauer. Gerade auch für Anlagen, die entsprechend diesen Anforderungen gebaut und für den Fahrzeugbetrieb typischen Leistungsbedarfsschwankungen unterworfen sind, besteht die Gefahr, daß mit dem Gas-/Dampfgemisch Tropfen aufgrund unzureichender vorheriger Verdampfung eintrittsseitig in den Reformierungsreaktor gelangen und sich dort bekanntermaßen schädigend auswirken.

Der Erfindung liegt als technisches Problem die Bereitstellung einer Reformierungsreaktoranlage der eingangs genannten Art zugrunde, die sich auch für mobile Anwendungen eignet und bei der insbesondere Maßnahmen getroffen sind, um eine lange Lebensdauer des im Reformierungsreaktor befindlichen Katalysatormaterials zu gewährleisten.

Die Erfindung löst dieses Problem durch die Bereitstellung eines Reformierungsreaktors mit den Merkmalen des Anspruchs 1. Bei dieser Anlage ist charakteristischerweise der Eintrittsseite einer eintrittsseitigen Reaktorstufe ein Tropfenfängerelement zugeordnet. Dieses Element fängt Tropfen ab, die eventuell in dem Gas-/Dampfgemisch, das dem Reformierungsreaktor zwecks Reformierung zugeführt wird, beispielsweise aufgrund zeitweise unvollständiger Verdampfung eines oder mehrerer der Gemischbestandteile aufgrund von Lastschwankungen der Anlage enthalten sind. Im Fall einer Anlage zur Wasserdampfreformierung von Methanol können auf diese Weise mit dem Tropfenfängerelement jegliche eventuell gebildete Methanol- und Wassertropfen von einem Eindringen in den Reformierungsreaktor abgehalten werden. Dies schließt Schädigungen des im Reaktor befindlichen Reformierungskatalysatormaterials aus, die bei Kontakt desselben mit solchen Methanol- und Wassertropfen auftreten können. Damit wird eine hohe Lebensdauer des Reformierungskatalysatormaterials gewährleistet.

Charakteristischerweise wird das Tropfenfängerelement mit Wärme beheizt, die in einer CO-Shiftreaktionsstufe des Reaktors durch exotherme Umwandlung von CO in CO₂ erzeugt wird. Aus dem Gas-/Dampfgemisch abgefangene Tropfen können so anschließend wieder in das Gas-/Dampfgemisch verdampft werden, ohne daß die hierfür erforderliche Wärme dem vorbeiströmenden Gas-/Dampfgemisch entnommen werden wird. Die Tropfenverdampfung im Tropfenfängerele ment ist damit weitgehend unabhängig vom momentanen Zustand des Gas-/Dampfgemischs und folglich von eventuellen Lastschwankungen der Anlage.

Bei einer nach Anspruch 2 weitergebildeten Anlage besteht das Tropfenfängerelement aus einem wärmeleitfähigen Metallvlies. Beim Durchtritt des in den Reaktor einzuleitenden, zu reformierenden Gas-/Dampfgemischs durch das Metallvlies werden jegliche im Gemisch enthaltene Tropfen vom Metallvlies zurückgehalten. Das Metallvlies kann dabei quasi als Puffer wirken, indem sich die Tropfen an ihm anlagern und dann in das vorbeiströmende Gas-/Dampfgemisch verdampfen können.

Bei einer nach Anspruch 3 weitergebildeten Anlage ist dem Tropfenfängerelement eine ergänzende aktive Heizquelle zugeordnet. Damit läßt sich stets eine ausreichende Wärmezufuhr zum Tropfenfängerelement auch in Situationen gewährleisten, in denen dafür die in der Shiftreaktionsstufe erzeugte Wärme nicht ausreicht.

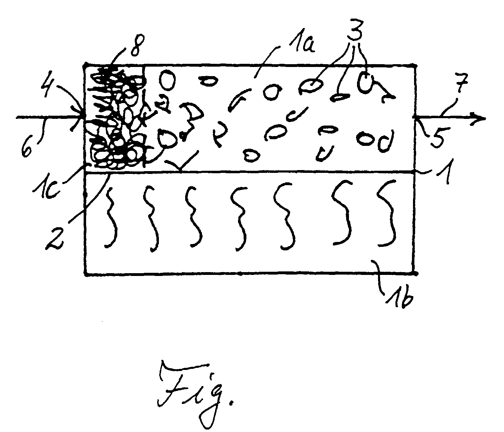

Eine bevorzugte Ausführungsforn der Erfindung ist in der Zeichnung dargestellt und wird nachfolgend beschrieben.

Die einzige Figur zeigt eine schematische Längsschnittansicht durch den Reformierungsreaktor einer Reformierungsreaktoranlage.

In der Figur ist schematisch ein Reformierungsreaktorteil 1 dargestellt, der eine erste, eintrittsseitige Reaktorstufe 1a einer Anlage mit einem dreistufigen Reaktoraufbau beinhaltet, bei welchem die erste, eintrittsseitige Stufe 1a als Vorreformierungsstufe dient, während von den nicht weiter gezeigten übrigen Stufen die nachfolgende, mittlere Stufe als Hauptreformierungsstufe fungiert und die austrittsseitige, dritte Stufe eine sogenannte Shiftreaktionsstufe bildet, in der Kohlenmonoxid in Kohlendioxid umgewandelt wird. Dabei wird meist die mittlere Stufe zur Aufrechterhaltung der endothermen Reformierungsreaktion aktiv von außen beheizt, während die erste und die dritte Stufe miteinander über ein Temperierfluid oder alternativ direkt in Wärmekontakt stehen und auf diese Weise einen passiven Reaktorteil bilden können, bei dem die Vorreformierungsstufe von der in der Shiftreaktionsstufe freiwerdenden Wärme beheizt wird. Der Reaktorteil 1 ist als zweiteiliger Wärmeübertrager ausgelegt, indem eine längsverlaufende, wärmeleitfähige Trennwand 2 den Reaktorteil 1 in zwei Hälften 1a, 1b teilt, von denen die eine als die eintrittsseitige Reaktorstufe bzw. als Vorreformierungsreaktionsraum 1a fungiert, während die andere Reaktorhälfte 1b von dem Temperierfluid durchströmt wird. Der Reaktionsraum 1a beinhaltet eine Pelletschüttung 3 aus einem für die jeweils beabsichtigte Reformierungsreaktion geeigneten Katalysatormaterial. An sich gegenüberliegenden Stirnseiten ist der Reaktionsraum 1a mit einem Einlaß 4 bzw. einem Auslaß 5 versehen. Über den Einlaß 4 kann ein zu reformierendes Gas-/Dampfgemisch 6 in den Reaktionsraum 1a eingeleitet werden, wo es in gewünschter Weise vorreformiert wird. Das entstehende Vorreformat 7 verläßt den Reaktionsraum 1a über den Auslaß 5. Mit Hilfe des durch den Temperierfluidraum 1b hindurchgeführten Temperierfluids wird der Reaktionsraum 1a auf einer für die beabsichtigte Refomierungsreaktion geeigneten Temperatur gehalten.

Der Reformierungsreaktor kann beispielsweise zur Wasserdampfreformierung von Methanol in einem Kraftfahrzeug mit Brennstoffzellenantrieb eingesetzt werden, um den für die Brennstoffzellen benötigten Wasserstoff zu erzeugen. In diesem Fall ist der eintrittsseitigen Reaktorstufe 1a zweckmäßigerweise ein nicht gezeigter Verdampfer vorgeschaltet, in welchem das zu reformierende Methanol zusammen mit Wasser zu dem in die eintrittsseitige Reaktorstufe 1a eingeleiteten Gas-/Dampfgemisch 6 aufbereitet wird. In der eintrittsseitigen Reaktorstufe 1a findet eine Methanolvorreformierungsreaktion statt. Um die dafür nötige Temperatur aufrechtzuerhalten, wird das mit in der Shiftreaktionsstufe erzeugter Wärme erhitzte Temperierfluid durch den angrenzenden Temperierfluidraum 1b geleitet.

Besonders bei Anlagen, die Lastschwankungen unterworfen sind, wie dies für in Kraftfahrzeugen verwendeten Anlagen zutrifft, besteht die Gefahr, daß wenigstens in bestimmten Betriebsphasen Methanol- oder Wassertropfen aufgrund unvollständiger Gemischaufbereitung im vorgeschalteten Verdampfer zusammen mit dem Gas-/Dampfgemisch 6 in den Reaktor, speziell in den Eintrittsbereich 1c des Reaktionsraums 1a gelangen. Um dies zu verhindern, ist im Eintrittsbereich 1c des Reaktionsraums 11 ein Tropfenfängerelement in Form eines wärmeleitfähigen Metallvlieses 8 eingebracht. Das Metallvlies 8 ist darauf ausgelegt, als Tropfensperre für eventuell im zugeführten Gas-/Dampfgemisch 6 enthaltene Methanol- oder Wassertropfen zu wirken. Das Gas-/Dampfgemisch 6 wird dabei durch das Metallvlies 8 hindurchgeleitet, bevor es mit der Katalysatorpelletschüttung 3 des Reaktionsraums 1a in Kontakt kommt. Mit dem Metallvlies 8 wird daher sichergestellt, daß das Reformierungskatalysatormaterial 3 nicht mit eventuellen unverdampften Methanol- oder Wassertropfen in Berührung kommt, was die Aktivität und damit die Funktionslebensdauer des Katalysatormaterials 3 herabsetzen würde.

Das Metallvlies 8 fungiert zudem quasi als Puffer dahingehend, daß die gegebenenfalls von ihm abgefangenen Methanol- oder Wassertropfen nicht verloren sind, sondern wieder in das vorbeiströmende Gas-/Dampfgemisch hineinverdampft werden können. Die dafür notwendige Wärme wird über das Temperierfluid von der Shiftreaktionsstufe zur Verfügung gestellt. Ergänzend kann ein aktives Heizen des Metallvlieses 8 mittels einer geeigneten Heizquelle vorgesehen sein. In dem in der Figur gezeigten Beispiel steht das Metallvlies 8 über die Trennwand 2 mit dem Temperierfluidraum 1b in Wärmeaustauschverbindung, so daß das gleichzeitig zum Heizen des mit der Katalysatorpelletschüttung 3 gefüllten Abschnitts des Reaktionsraums 1a dienende Temperierfluid zusätzlich als Heizquelle für das Metallvlies 8 dient.

Das Einbringen des Tropfenfängerelementes beispielsweise in Form des gezeigten Metallvlieses 8 in den Eintrittsbereich einer solchen Vorreformierungsstufe macht bei gegebenen Leistungsbedarf der Anlage keine merkliche Bauraumvergrößerung derselben erforderlich. Denn in der Vorreformierungsstufe ist im Vergleich zur Hauptreformierungsstufe und zur Shiftreaktionsstufe nur verhältnismäßig wenig Katalysatormaterial erforderlich, das bei üblichen Bauformen von passiven Reaktorteilen in Form eines Wärmeübertragers, in welchem die Vorreformierungsstufe und die Shiftreaktionsstufe integriert realisiert sind, ohne weiteres untergebracht werden kann. Dabei kann ebenso problemlos noch das Tropfenfängerelement 8 im Eintrittsbereich der Vorreformierungsstufe entsprechend dem gezeigten Reaktor 1 untergebracht werden. Alternativ ist es selbstverständlich möglich, das Tropfenfängerelement außerhalb des Reaktors 1, nämlich in Strömungsrichtung vor dem Reaktionsraumeinlaß 4 in der Einspeiseleitung anzuordnen, mit der das zu reformierende Gas-/Dampfgemisch 6 in den Reaktor 1 eingeleitet wird. Des weiteren kann die Shiftreaktionsstufe in direktem Wärmekontakt zur eintrittsseitigen Reaktionsstufe 1a einschließlich dem Tropfenfängerelement 8 stehen, indem sie den Platz des Temperierfluidraumes 1b einnimmt, wodurch sich ein separates Temperierfluid erübrigt.

## Patentansprüche

1. Reformierungsreaktoranlage, insbesondere zur Wasserdampfreformierung von methanol, mit
- einem mehrstufigen Reformierungsreaktor mit einer eintrittsseitigen Reaktorstufe (1a), in der sich ein Reformierungskatalysatormaterial (3) befindet und der eintrittsseitig ein zu reformierendes Gas-/Dampfgemisch (6) zuführbar ist, sowie mit einer oder mehreren weiteren Reaktorstufen, von denen eine als Shiftreaktionsstufe zur exothermen Umwandlung von im Produktgas der Reformierungsreaktion enthaltenem Kohlenmonoxid in Kohlendioxid ausgelegt ist,
**dadurch gekennzeichnet**, **daß**
- der Eintrittsseite der eintrittsseitigen Reaktorstufe (1a) ein Tropfenfängerelement (8) zugeordnet ist, das mit in der Shiftreaktionsstufe erzeugter Wärme beheizt wird.

2. Reformierungsreaktoranlage nach Anspruch 1, weiter
**dadurch gekennzeichnet**, **daß**
das Tropfenfangerelement aus einem wärmeleitfähigen Metallvlies (8) besteht.

3. Reformierungsreaktoranlage nach Anspruch 1 oder 2, weiter
**dadurch gekennzeichnet**, **daß**
dem Tropfenfängerelement (8) eine Heizquelle zum ergänzenden aktiven Beheizen desselben zugeordnet ist.
